(19) 
**Europäisches Patentamt**
**European Patent Office**
**Office européen des brevets**

(11) **EP 4 296 882 A1**

(12) **EUROPEAN PATENT APPLICATION**

(43) Date of publication:
**27.12.2023 Bulletin 2023/52**

(21) Application number: **22180744.9**

(22) Date of filing: **23.06.2022**

(51) International Patent Classification (IPC):
**G06F 40/166** (2020.01)

(52) Cooperative Patent Classification (CPC):
**G06F 40/166**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Documizer ApS**
**2000 Frederiksberg (DK)**

(72) Inventor: **CAPION, Daniel**
**2000 Frederiksberg (DK)**

(74) Representative: **Aera A/S**
**Niels Hemmingsens Gade 10, 5th Floor**
**1153 Copenhagen K (DK)**

(54) **ELECTRONIC DEVICE FOR TEXT PROCESSING, SYSTEMS, AND RELATED METHODS**

(57)     An electronic device and related methods are disclosed, the electronic device comprising an interface, one or more processors, and a memory, wherein the electronic device is configured to receive, in an active document of a first application, a first user input indicative of a user guidance tool; generate a request based on a document identifier and a user profile associated with a user of the tool; transmit the request; receive a guidance document associated with the request; and output the guidance document.

Fig. 2

**Description**

The present disclosure pertains to the field of electronic devices, and in particular to electronic devices for document and/or text processing, systems and related methods.

BACKGROUND

Documentation and text documents for documentation purposes, such as research and development documentation, are often required to be written in a specific and precise manner. For example, a company may require its employees to formulate any one type of document according to a specific structure and/or addressing specific contextual elements.

Challenges remain in providing guidance for a user in drafting documentation in a consistent and updated manner.

SUMMARY

Thus, there is a need for tools and methods for improving documentation drafting.

Accordingly, an electronic device comprising an interface, a processor, and a memory is provided, wherein the electronic device is configured to receive, e.g. in an active document of a first application, a first user input indicative of a user guidance tool; generate a request, e.g. based on a document identifier and/or a user profile associated with a user of the tool; transmit the request; receive a guidance document associated with the request; and output the guidance document.

A method of operating an electronic device comprising an interface, one or more processors, and a memory. The method comprises receiving, e.g. in an active document of a first application executed by the one or more processors, a first user input indicative of a user guidance tool; generating, using the one or more processors, a request, e.g. based on a document identifier and a user profile associated with a user of the tool; transmitting, e.g. via the interface, the request; receiving, e.g. via the interface, a guidance document associated with the request; and outputting the guidance document.

Further, systems and non-transitory computer readable medium implementing functionality as described herein is disclosed.

The present disclosure may remove the need for guidance text to be included directly in the active text document itself. Instead, the present disclosure allows for the guidance text to be made available to the user in a manner which does not require any potential editing and/or removal of the guidance text. This is advantageous as the present disclosure reduces the risk of guidance text (such as comments, hidden text and/or highlighted text) from being unintentionally included in the final version of a document written by the user.

The present disclosure allows for a simplified architecture of a guidance document system. A plurality of documents can be associated with the same guidance document as they can be assigned the same document identifier. For example, to update the guidance text for a plurality of documents, the guidance document associated with the document identifier for the plurality of documents can be centrally updated. Therefore, documents with the same document identifier, are then associated accordingly with the updated guidance text. Advantageously, this can reduce the risk of using an outdated guidance text as the centralized guidance document server or server device removes the requirement to update each document with the new guidance text individually. A further advantage is a reduction of the time required to provide updated guidance text for a plurality of documents.

A simple and error-safe user guidance tool and related methods are provided, in turn allowing provision of time-efficient and updated text guidance to the user.

For example, a company may include sensitive or critical information, such as opinions on important matters, or company positions on guidance, in the guidance text intended for only employees to see. It may be appreciated that the present disclosure may provide improved privacy/security as, by reducing the risk of guidance text being unintentionally included in the final version of the active text document, the risk of unauthorized users without access to the guidance text viewing the potentially sensitive guidance text is reduced. Accordingly, the risk of sensitive information being leaked to third parties is reduced.

An advantage of the present disclosure is that the need for the user to spend time searching for a guidance document associated with the active document is negated as this is output to the user by the present disclosure. In other words, the present disclosure saves the user valuable time that could be spent on formulating the document itself.

Therefore, guidance text documents are frequently used by employees and/or private users to improve consistency and accuracy of writing. However, these guidance documents can be long and complicated so it can be difficult for a user to identify the correct guidance document. Additionally, some guidance documents may not be up to date. Due to this, searching for a relevant guidance document can be a time-consuming process for the user. The present disclosure reduces the need for searching and identifying relevant guidance information while simultaneously reducing the risk of using an incorrect or outdated guidance document.

Further, user guidance using few or only a single user input or click is provided in turn providing easy and convenient user guidance.

BRIEF DESCRIPTION OF THE DRAWINGS

The above and other features and advantages of the present disclosure will become readily apparent to those skilled in the art by the following detailed description of examples thereof with reference to the attached drawings, in which:

Fig. 1 schematically illustrates an example system according to the present disclosure,

Fig. 2 is a flow chart of an example method according to the present disclosure,

Fig. 3 is an example user interface according to the present disclosure,

Fig. 4 is an example user interface according to the present disclosure,

Fig. 5 is an example user interface according to the present disclosure, and

Fig. 6 is an example user interface according to the present disclosure.

DETAILED DESCRIPTION

Various examples and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the examples. They are not intended as an exhaustive description of the disclosure or as a limitation on the scope of the disclosure. In addition, an illustrated example needs not have all the aspects or advantages shown. An aspect or an advantage described in conjunction with a particular example is not necessarily limited to that example and can be practiced in any other examples even if not so illustrated, or if not so explicitly described.

The figures are schematic and simplified for clarity, and they merely show details which aid understanding the disclosure, while other details have been left out. Throughout, the same reference numerals are used for identical or corresponding parts.

It is to be understood that a description of a feature in relation to the electronic device is also applicable to the corresponding feature in the method(s) of operating an electronic device as disclosed herein.

The present disclosure relates in general to text processing, tools and methods for text processing and/or editing.

An electronic device is disclosed. The electronic device comprises an interface, one or more processors, and a memory. The electronic device may be a computer, such as a laptop computer, tablet, or a computer system comprising a computing unit with peripheral device(s), such as one or more of a display, keyboard, mouse, and secondary computing unit, the peripheral device(s) wired and/or wirelessly connected to the computing unit and/or other peripheral devices.

The electronic device is configured to receive, e.g. in an active document of a first application, a first user input indicative of a user guidance tool. The active document may be a first document that the user is in the process of editing, such as a document that is incomplete and requires further input to be finalised. In some examples, there may be one or more active documents at any given moment.

The first application may be a text editor, such as a Microsoft Word application, Notepad application, Mac Pages application, Google Docs application, LaTeX application, Html application, or the like. The first application may be a web browser application implementing text editing functionality, e.g. for provision of cloud-based text editing. The first application may be a spreadsheet application, such as Excel or Numbers. The first application may be a presentation application, such as Powerpoint or Key. In some examples, to output the guidance document comprises to output the guidance document using the first application, e.g. via a second document of the first application, a dialog box, or a help box.

The first user input may comprise an interaction between the user and the interface. In some examples, the first user input comprises activation of a user interface element, such as a button. In other words, the electronic device may be configured such that, if the electronic device receives a user input via the interface, a request is generated. In some examples, the first user input is a command, such as a voice command.

The user guidance tool may provide guidance for the user. The user guidance tool may comprise a plugin to or of the first application, a function of the first application, a feature of the first application, a tool of the first application and/or an add-in to or of the first application. In some embodiments, the user interface element associated with generating a request is located in a ribbon or a menu of the first application.

The electronic device, such as the user guidance tool, is configured to, e.g. in response to the first user input, generate a request, e.g. based on a document identifier and/or a user profile associated with a user of the user guidance tool.

The user profile may comprise information indicative of a user. In some examples, the user profile comprises information manually inputted by a user. In some examples, the user profile comprises information obtained from a database, such as one or more access control lists (ACLs). The user profile or at least parts thereof, such as user identifier and/or group identifier, may be stored in a configuration file for the first application and/or the user guidance tool. The user profile may be indicative of whether the user has access to one or more guidance documents.

The document identifier also denoted DOC_ID may comprise a label, a text string, and/or a number. In some examples, the document identifier is associated with a guidance document, e.g. stored in a database. The guidance document may comprise one or more of guidance text, guidance figures and/or guidance pictures. In some examples, the output of the guidance document is separated into two different regions of guidance text where one region, such as a first region, is read-only and another region, such as a second region, is optionally available for a user to edit/update and/or comment. For example, the read-only region may comprise a guidance template and/or the other region may, for example, comprise information indicative of additional information, such as company policy, internal opinions, notes related to the active document, etc. In some examples, a second application and a third application may be used to display the two regions such that there is one application per region.

The guidance document may comprise information indicative of a formulation of an active document. For example, the guidance document may comprise information relating to one or more of the content, structure, wording, and formatting of the active text document. In some examples, the guidance document provides or comprises regulatory and/or scientific background/input for the active document in the first application. In some examples, the guidance document provides or comprises requirements, e.g. from public authorities and/or organizations, for the active document in the first application. Examples of requirements may be formatting requirements, such as margin, font, etc. In some examples, the guidance document is a template, such as a template indicative of a preset format associated with the active document. In some examples, a single document identifier is associated with a plurality of documents (such as active documents). In other words, a plurality of documents (such as active documents) may have the same document identifier. It follows that, in some examples, a plurality of documents (such as active documents) may be associated with the same guidance document. Therefore, the electronic device is configured such that, for example, updating the guidance text of a guidance document may result in updated guidance text for all documents (such as active documents) associated with the updated guidance document without further input from the user. In other words, the electronic device is configured such that the user may, for example, edit the guidance text for a plurality of documents (such as active documents) by editing only one guidance document.

The electronic device is configured to transmit the request, e.g. to a dedicated server device.

In some examples, the request is or comprises a Uniform Resource Locator (URL). For example, the request may comprise a request to open a webpage or use a webservice. In some examples, the request is associated with one or more guidance documents. The request may vary depending on a user input. In some examples, the request is or comprises a database call. For example, there may be one or more guidance documents associated with an active document. Therefore, in some examples, the electronic device is configured such that the user can choose between one or more requests each associated with one or more different guidance documents. In other words, the guidance documents output via the interface to the user, in some examples, can vary depending on a user input.

In some examples, transmitting the request comprises the transmission of information indicative of a request for a guidance document from the electronic device to a server device, e.g. comprising a database.

The electronic device is configured to receive a guidance document associated with the request. The guidance document may be a read-only document. The guidance document may be a pdf document or a word-document. The guidance document may be in text format. The guidance document may be in a web-page format. In one or more examples, the guidance document comprises media content, such as video and/or audio content.

The electronic device is configured to output the guidance document. To output the guidance document may comprise displaying the guidance document to the user via the interface. In some examples, the display of the guidance document is provided using a dialog box in the first application. To output the guidance document may comprise, in some examples, to output the guidance document in and/or using the first application, such as in a window or frame of the first application, or in and/or using a second application, such as in a window or frame of the second application. To output the guidance document may comprise playing video and/or audio of media content of or associated with the guidance document. In some examples, to output the guidance document comprises to output audio of a voice assistant reading guidance text of the guidance document. The type of output provided to the user can, in some examples, be chosen by the user.

In one or more example electronic devices, the electronic device is configured to receive, in an active document, such as a first document, of a first application, a first user input indicative of a user guidance tool; generate a request based on a document identifier and a user profile associated with a user of the tool; transmit the request; receive a guidance document associated with the request; and output the guidance document.

In one or more example electronic devices, to output the guidance document comprises to output the guidance document using a second application, e.g. by displaying the guidance document in a window or frame of the second application.

In some examples, the second application is an application external to/different from the first application. In some examples, the second application is the same type of application as the first application. The second application may be a text viewer, such as a pdf viewer. The second application may be a text editor, such as a Microsoft Word application, Notepad application, Mac Pages application, Google Docs application, LaTeX application, Html application, or the like. The second application may be a web browser application implementing guidance document output functionality, such as text viewing functionality and/or text editing functionality, e.g. for provision of cloud-based text viewing and/or editing. The second application may be a spreadsheet application, such as Excel or Numbers. The second application may be a presentation application, such as Powerpoint or Key.

In one or more example electronic devices, to output the guidance document comprises to output the guidance document using the first application, e.g. by displaying the guidance document in a window or frame of the first application.

In one or more example electronic devices, the user profile comprises a group identifier. In one or more example electronic devices, to generate a request comprises to determine the request, e.g. based on the group identifier. To determine the request based on the group identifier may comprise to include the group identifier, e.g. as part of a URL or text string, in the request. To determine the request based on the group identifier may comprise to select, e.g. via a look-up table, the request based on the group identifier. To determine the request based on the group identifier may comprise to transform the group identifier, e.g. via a hash function and/or encryption, and include the transformed group identifier, e.g. as part of a URL or text string, in the request. In other words, the request may comprise one or both of the group identifier and the transformed group identifier.

The group identifier may comprise information indicative of a group associated with the user, such as a company the user works for. In some embodiments or examples, the group identifier is the same for all employees of an organisation. The group identifier may, for example, be part of a URL and/or a company name or ID. The group identifier is, in some examples, used in combination with the user identifier and/or type identifier to generate a request. In one or more examples, a group identifier is indicative of an organization or group to which the user belongs, such as the organization to which a license to the first application and/or the user guidance tool belongs.

In one or more example electronic devices, the user profile comprises a user identifier. In one or more example electronic devices, to generate a request comprises to determine the request, e.g. based on the user identifier. To determine the request based on the group identifier may comprise to include the user identifier, e.g. as part of a URL or text string, in the request. To determine the request based on the user identifier may comprise to select, e.g. via a look-up table, the request based on the user identifier. To determine the request based on the user identifier may comprise to transform the user identifier, e.g. via a hash function and/or encryption, and include the transformed user identifier, e.g. as part of a URL or text string, in the request. In other words, the request may comprise one or both of the user identifier and the transformed user identifier.

The user identifier may comprise information indicative of a user, such as an individual. The user identifier may, for example, be part of a URL and/or a company name or ID. The user identifier is, in some examples, used in combination with the type identifier and group identifier to generate a request. In one or more examples, the user profile comprises a user identifier and/or a user name respectively associated with, e.g. uniquely identifying, the user. The user profile may comprise one or more access identifiers associated with the user's access to the guidance documents or parts thereof.

In one or more example electronic devices, the document identifier is or comprises a type identifier. In one or more example electronic devices, to generate a request comprises to determine the request, e.g. based on the type identifier. To determine the request based on the document identifier may comprise to include the document identifier, e.g. as part of a URL or text string, in the request. To determine the request based on the document identifier may comprise to select, e.g. via a look-up table, the request based on the document identifier. To determine the request based on the document identifier may comprise to transform the document identifier, e.g. via a hash function and/or encryption, and include the transformed document identifier, e.g. as part of a URL or text string, in the request. In other words, the request may comprise one or both of the document identifier and the transformed document identifier.

In one or more example electronic devices, to generate a request comprises to retrieve the group identifier also denoted G_ID from a configuration file of the first application; retrieve the document identifier from metadata of the active document; and wherein to generate the request comprises to include the group identifier and the document identifier in the request.

In one or more examples, the request REQ may be given as a text string or URL according to:

$$REQ = \text{"https://"} + [G\_ID] + \text{"/"} + [DOC\_ID] + \text{".pdf"},$$

where G_ID is a group identifier and D_ID is a document identifier. It is to be noted that text string parts "https://" and/or ".pdf" may be omitted, e.g. by respectively including in the group identifier and the document identifier.

The type identifier may comprise information indicative of one or more guidance documents, e.g. the type identifier may be indicative of the document type. The type identifier may, for example, comprise a template ID, part of a URL and/or a string of text. The type identifier is, in some examples, used in combination with the user identifier and/or group identifier to generate the request.

In one or more example electronic devices, to output the guidance document comprises to insert at least a part of a guidance element in the active document.

The guidance element may comprise a section of text, for example a paragraph of text. This text comprises, for example, guidance text. The guidance element comprises, in some examples, an extract of guidance text from the guidance document. In some examples, the guidance element comprises a dialog box.

In one or more example electronic devices, the guidance document has a second file format different from a first file format of the active document.

The first file format of the active document may be a MS Word document, a pdf and/or a webpage. The second file format of the guidance document may be a Word document, a pdf document and/or a webpage.

In one or more example electronic devices, the second application is a web browser or a document viewer.

In some examples, the second application comprises a web browser, such as Safari, Firefox, Chrome, Edge, etc. The web browser can, for example, access and output the guidance document if the guidance document is a webpage. In some examples, the second application is a document viewer, such as Adobe reader, preview, Google Drive, etc. In some examples, the document viewer comprises a document display and/or editing program.

In one or more example electronic devices, to generate a request comprises to determine an address based on the document identifier and the user profile. In one or more example electronic devices, to generate a request comprises to encrypt the address for provision of an encrypted address. In one or more example electronic devices, to generate a request comprises to include the encrypted address in the request.

In some examples, the address is associated with, such as points to, a guidance document. In some examples, to determine the address associated with a guidance document comprises using the processor of the electronic device. In some examples, the electronic device is configured to determine the address based on a group identifier, a user identifier and/or a type identifier.

In some examples, the electronic device is configured to encrypt the address using the processor, e.g. by using a secure connection between the electronic device and a server device.

A method of operating an electronic device comprising an interface, one or more processors, and a memory is disclosed.

The method comprises receiving, e.g. in an active document of a first application executed by the one or more processors, a first user input indicative of a user guidance tool.

The method comprises generating, using the one or more processors and optionally in response to the first user input, a request based on a document identifier and a user profile associated with a user of the tool.

The method comprises transmitting, via the interface, the request. The method comprises receiving, via the interface, a guidance document associated with the request.

The method comprises outputting the guidance document.

In one or more example methods, outputting the guidance document comprises outputting, using a second application, the guidance document.

In one or more example methods, outputting the guidance document comprises outputting, using the first application, the guidance document.

In one or more example methods, the user profile comprises a group identifier. In one or more example methods, generating a request comprises determining the request based on the group identifier.

In one or more example methods, the user profile comprises a user identifier. In one or more example methods, generating a request comprises determining the request based on the user identifier.

In one or more example methods, the document identifier comprises a type identifier. In one or more example methods, generating a request comprises determining the request based on the type identifier.

In one or more example methods, outputting the guidance document comprises inserting at least a part of a guidance element in the active document.

In one or more example methods, the guidance document has a second file format different from a first file format of the active document.

In one or more example methods, the second application is a web browser or a document viewer.

In one or more example methods, generating a request comprises determining an address based on the document identifier and the user profile. In one or more example methods, generating a request comprises encrypting the address for provision of an encrypted address. In one or more example methods, generating a request comprises including the encrypted address in the request.

It is noted that descriptions and features of electronic device functionality, such as electronic device configured to, also apply to methods and vice versa. For example, a description of an electronic device configured to determine also applies to a method, e.g. of operating an electronic device, wherein the method comprises determining and vice versa.

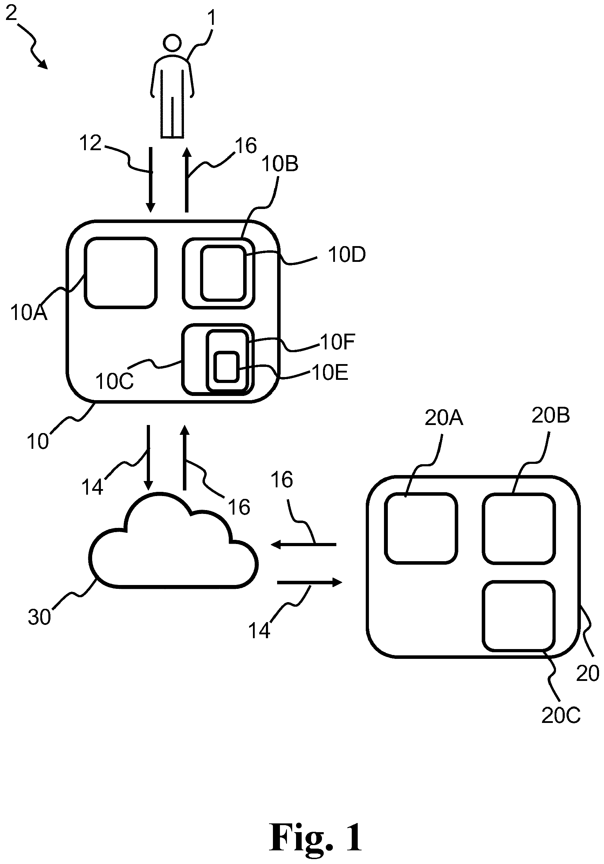

Fig. 1 schematically illustrates a user 1 and an example system according to the present disclosure. The system 2 comprises an electronic device 10 and a server device 20 configured to communicate via network 30, the electronic device 10 comprising an interface 10A, one or more processors 10B, and a memory 10C, wherein the electronic device 10 is configured to receive, in an active document of a first application, a first user input 12 indicative of a user guidance tool; generate a request 14 based on a document identifier and a user profile 10E associated with a user of the tool and stored in a configuration file 10F of the memory; transmit, the request 14; receive a guidance document 16 associated with the request; and output, e.g. using the first application or a second application, the guidance document 16. The server device 20 comprises an interface 20A, one or more processors 20B, and a memory 20C. The server device is configured to receive the request 14; provide, such as generate and/or retrieve, a guidance document 16 associated with the request; and transmit the guidance document 16.

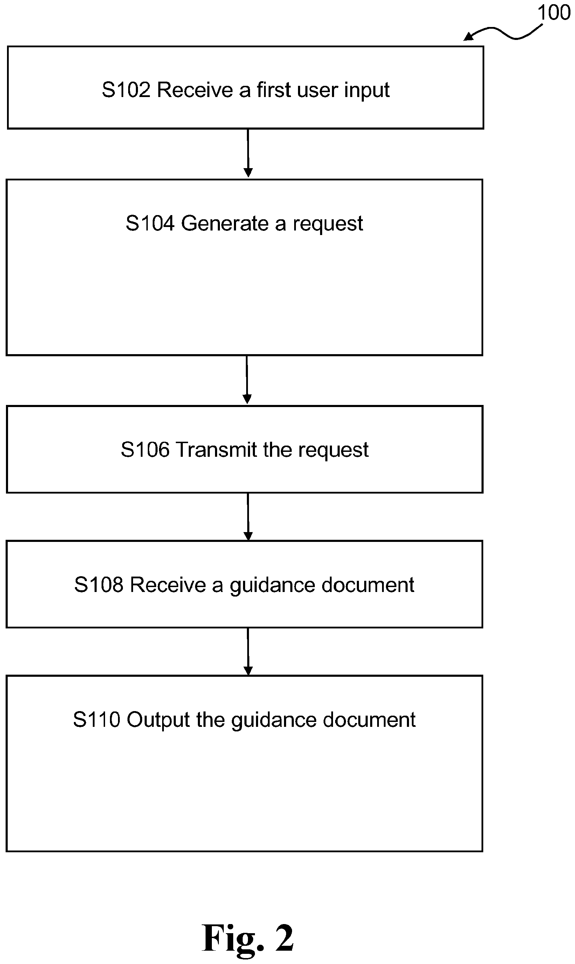

Fig. 2 is a flow chart of an exemplary method of operating an electronic device. The method 100 is a method of operating an electronic device comprising an interface, one or more processors, and a memory, the method 100 comprising receiving S102, e.g. in an active document of a first application executed by the one or more processors, a first user input indicative of a user guidance tool; generating S104, e.g. using the one or more processors, a request based on a document identifier and/or a user profile associated with a user of the tool; transmitting S106, via the interface, the request; receiving S108, via the interface, a guidance document associated with the request; and outputting S110 the guidance document.

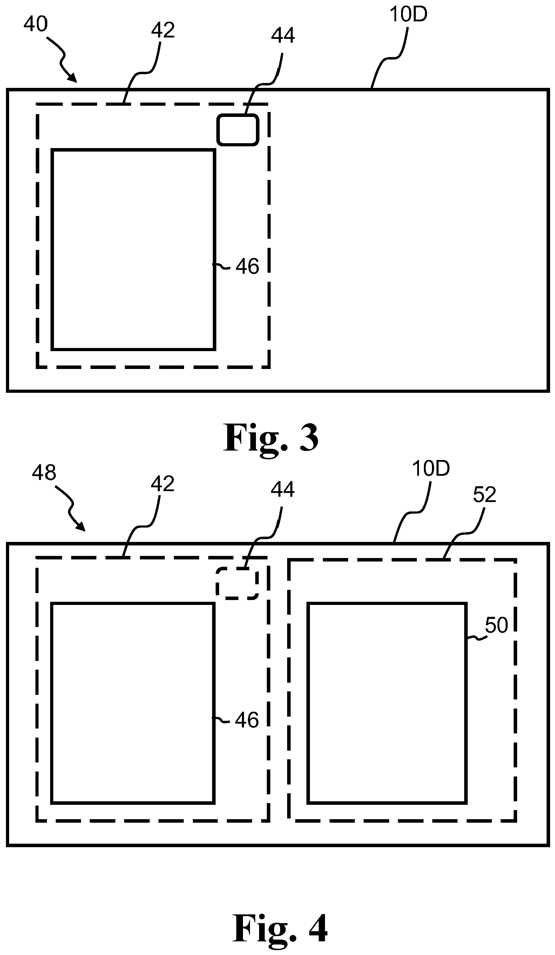

Fig. 3 shows an example user interface 40 being output on display 10D. The electronic device executes a first application 42 being a text editing application. The user interface 40 comprises, e.g. implemented as a part of the first application as illustrated, a user interface element 44 for activating a user guidance tool upon detection of a user input activating the user interface element 44. In response to a user activating the user interface element 44, the electronic device/user guidance tool, such as a plugin, feature, or function of the first application 42, is configured to generate and transmit a request based on a document identifier associated with the active document 46 and a user profile associated with a user of the tool, the user profile optionally stored in a configuration file of the first application/user guidance tool. The document identifier may be part of metadata of or associated with the active document 46.

Fig. 4 shows an example user interface 48 being output on display 10D upon a user activating user interface element 44 indicative of a user guidance tool, see Fig. 3. The electronic device is configured to receive a guidance document associated with the request; and output the guidance document 50 using a second application 52. The guidance document is a pdf document or a web page document (read-only) and the second application 52 is a pdf-viewer or a web-browser.

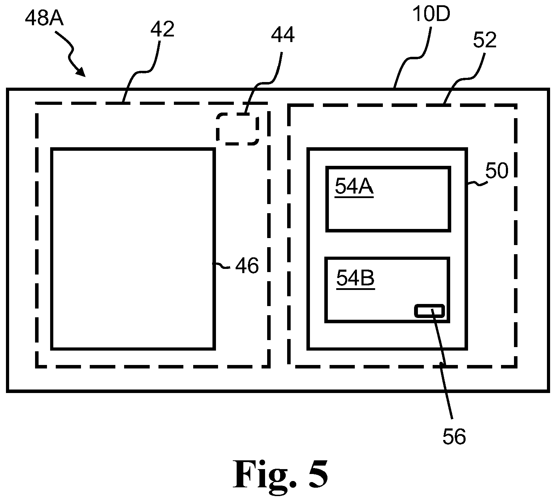

Fig. 5 shows an example user interface 48A being output on display 10D upon a user activating user interface element 44 indicative of a user guidance tool, see Fig. 3. The electronic device is configured to receive a guidance document associated with the request; and output the guidance document 50 using a second application 52. The guidance document 50 comprises a first region 54A which is a read-only region comprising read-only text and a second region 54B optionally being an editable region. The second region 54B allows for user feedback and/or user input on the guidance documents. The second region 54B optionally comprises a submit button/user interface element 56 allowing a user to submit feedback/input in the second region 54B to the server device.

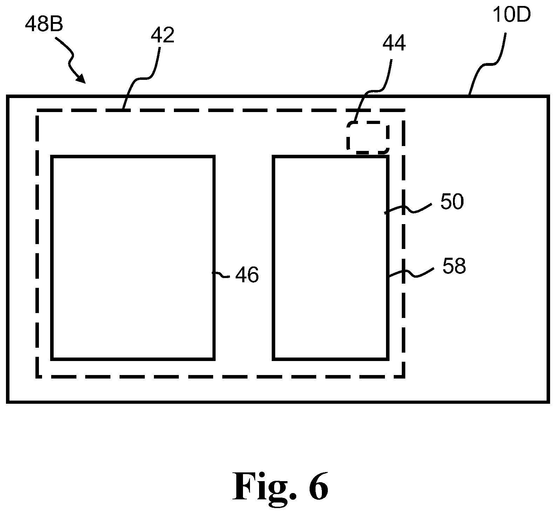

Fig. 6 shows an example user interface 48B being output on display 10D upon a user activating user interface element 44 indicative of a user guidance tool, see Fig. 3. The electronic device is configured to receive a guidance document associated with the request; and output the guidance document 50 as a dialog box 58 optionally with read-only text using and as part of the first application 42.

Examples of electronic devices, systems, and methods according to the disclosure are set out in the following items:

Item 1. An electronic device comprising an interface, one or more processors, and a memory, wherein the electronic device is configured to:

receive, in an active document of a first application, a first user input indicative of a user guidance tool;

generate a request based on a document identifier and a user profile associated with a user of the tool;

transmit the request;

receive a guidance document associated with the request; and

output the guidance document.

Item 2. Electronic device according to item 1, wherein to output the guidance document comprises to output, using a second application, the guidance document.

Item 3. Electronic device according to any one of items 1-2, wherein to output the guidance document comprises to output, using the first application, the guidance document.

Item 4. Electronic device according to any one of items 1-3, wherein the user profile comprises a group identifier and wherein to generate a request comprises to determine the request based on the group identifier.

Item 5. Electronic device according to any one of items 1-4, wherein the user profile comprises a user identifier and wherein to generate a request comprises to determine the request based on the user identifier.

Item 6. Electronic device according to any one of items 1-5, wherein the document identifier comprises a type identifier and wherein to generate a request comprises to determine the request based on the type identifier.

Item 7. Electronic device according to any one of items 1-6, wherein to output the guidance document comprises to insert at least a part of a guidance element in the active document.

Item 8. Electronic device according to any one of items 1-7, wherein the guidance document has a second file format different from a first file format of the active document.

Item 9. Electronic device according to any one of items 1-8, wherein the second application is a web browser or a document viewer.

Item 10. Electronic device according to any one of items 1-9, wherein to generate a request comprises to determine an address based on the document identifier and the user profile; encrypt the address for provision of an encrypted address; and include the encrypted address in the request.

Item 11. Method of operating an electronic device comprising an interface, one or more processors, and a memory, the method comprising:

receiving, in an active document of a first application executed by the one or more processors, a first user input indicative of a user guidance tool;

generating, using the one or more processors, a request based on a document identifier and a user profile associated with a user of the tool;

transmitting, via the interface, the request;

receiving, via the interface, a guidance document associated with the request; and

outputting the guidance document.

Item 12. Method according to item 11, wherein outputting the guidance document comprises outputting, using a second application, the guidance document.

Item 13. Method according to any one of items 11-12, wherein outputting the guidance document comprises outputting, using the first application, the guidance document.

Item 14. Method according to any one of items 11-13, wherein the user profile comprises a group identifier and wherein generating a request comprises determining the request based on the group identifier.

Item 15. Method according to any one of items 11-14, wherein the user profile comprises a user identifier and wherein generating a request comprises determining the request based on the user identifier.

Item 16. Method according to any one of items 11-15, wherein the document identifier comprises a type identifier and wherein generating a request comprises determining the request based on the type identifier.

Item 17. Method according to any one of items 11-16, wherein outputting the guidance document comprises inserting at least a part of a guidance element in the active document.

Item 18. Method according to any one of items 11-17, wherein the guidance document has a second file format different from a first file format of the active document.

Item 19. Method according to any one of items 11-18, wherein the second application is a web browser or a document viewer.

Item 20. Method according to any one of items 11-19, wherein generating a request comprises:

determining an address based on the document identifier and the user profile;

encrypting the address for provision of an encrypted address; and

including the encrypted address in the request.

Item 21. An electronic device comprising an interface, one or more processors, and a memory, wherein the electronic device is configured to perform the method of any of claims 11-20.

Item 22. System comprising an electronic device and a server device, wherein the electronic device is an electronic device according to any of items 1-10 or 21.

Item 23. A non-transitory computer readable medium comprising instructions stored thereon that, when executed by at least one processor, cause the at least one processor to carry out operations comprising:

receiving, in an active document of a first application executed by the one or more processors, a first user input indicative of a user guidance tool;

generating, using the one or more processors, a request based on a document identifier and a user profile associated with a user of the tool;

transmitting, via the interface, the request;

receiving, via the interface, a guidance document associated with the request; and

outputting the guidance document.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that the figures comprise some circuitries or operations which are illustrated with a solid line and some circuitries, components, features, or operations which are illustrated with a dashed line. Circuitries or operations which are comprised in a solid line are circuitries, components, features or operations which are comprised in the broadest example. Circuitries, components, features, or operations which are comprised in a dashed line are examples which may be comprised in, or a part of, or are further circuitries, components, features, or operations which may be taken in addition to circuitries, components, features, or operations of the solid line examples. It should be appreciated that these operations need not be performed in order presented. Furthermore, it should be appreciated that not all of the operations need to be performed. The example operations may be performed in any order and in any combination. It should be appreciated that these operations need not be performed in order presented. Circuitries, components, features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the examples may be implemented at least in part by means of both hardware and software, and that several "means", "units" or "devices" may be represented by the same item of hardware.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than or equal to 10% of, within less than or equal to 5% of, within less than or equal to 1% of, within less than or equal to 0.1% of, and within less than or equal to 0.01% of the stated amount. If the stated amount is 0 (e.g., none, having no), the above recited ranges can be specific ranges, and not within a particular % of the value. For example, within less than or equal to 10 wt./vol. % of, within less than or equal to 5 wt./vol. % of, within less than or equal to 1 wt./vol. % of, within less than or equal to 0.1 wt./vol. % of, and within less than or equal to 0.01 wt./vol. % of the stated amount.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

LIST OF REFERENCES

| | |
|---|---|
| 1 | user |
| 2 | system |
| 10 | electronic device, |
| 10A | interface |
| 10B | one or more processors |
| 10C | memory |
| 10D | display |
| 10E | configuration file |
| 12 | first user input |
| 14 | request |
| 16 | guidance document |
| 20 | server device |
| 20A | interface |
| 20B | one or more processors |
| 20C | memory |
| 40 | user interface |
| 42 | first application |
| 44 | user interface element |
| 46 | active document |
| 48 | user interface |
| 50 | guidance document |
| 52 | second application |
| 54A | first region of guidance document |
| 54B | second region of guidance document |

| 56 | submit button |
|----|----|
| 58 | dialog box |
| 100 | Method of operating an electronic device |
| S102 | receiving a first user input indicative of a user guidance tool |
| S104 | generating a request based on a document identifier and a user profile associated with a user of the tool |
| S106 | transmitting the request |
| S108 | receiving a guidance document associated with the request |
| S110 | outputting the guidance document. |

**Claims**

1. An electronic device comprising an interface, one or more processors, and a memory, wherein the electronic device is configured to:

   receive, in an active document of a first application, a first user input indicative of a user guidance tool;
   generate a request based on a document identifier and a user profile associated with a user of the tool;
   transmit the request;
   receive a guidance document associated with the request; and
   output the guidance document.

2. Electronic device according to claim 1, wherein to output the guidance document comprises to output, using a second application, the guidance document.

3. Electronic device according to any one of claims 1-2, wherein to output the guidance document comprises to output, using the first application, the guidance document.

4. Electronic device according to any one of claims 1-3, wherein the user profile comprises a group identifier and wherein to generate a request comprises to determine the request based on the group identifier.

5. Electronic device according to any one of claims 1-4, wherein the user profile comprises a user identifier and wherein to generate a request comprises to determine the request based on the user identifier.

6. Electronic device according to any one of claims 1-5, wherein the document identifier comprises a type identifier and wherein to generate a request comprises to determine the request based on the type identifier.

7. Electronic device according to any one of claims 1-6, wherein to output the guidance document comprises to insert at least a part of a guidance element in the active document.

8. Electronic device according to any one of claims 1-7, wherein the guidance document has a second file format different from a first file format of the active document.

9. Electronic device according to any one of claims 1-8, wherein the second application is a web browser or a document viewer.

10. Electronic device according to any one of claims 1-9, wherein to generate a request comprises to determine an address based on the document identifier and the user profile; encrypt the address for provision of an encrypted address; and include the encrypted address in the request.

11. Method of operating an electronic device comprising an interface, one or more processors, and a memory, the method comprising:

    receiving, in an active document of a first application executed by the one or more processors, a first user input indicative of a user guidance tool;
    generating, using the one or more processors, a request based on a document identifier and a user profile associated with a user of the tool;
    transmitting, via the interface, the request;
    receiving, via the interface, a guidance document associated with the request; and

outputting the guidance document.

12. Method according to claim 11, wherein outputting the guidance document comprises outputting, using a second application, the guidance document.

13. Method according to any one of claims 11-12, wherein outputting the guidance document comprises outputting, using the first application, the guidance document.

14. Method according to any one of claims 11-13, wherein the user profile comprises a group identifier and wherein generating a request comprises determining the request based on the group identifier.

15. A non-transitory computer readable medium comprising instructions stored thereon that, when executed by at least one processor, cause the at least one processor to carry out operations comprising:

receiving, in an active document of a first application executed by the one or more processors, a first user input indicative of a user guidance tool;
generating, using the one or more processors, a request based on a document identifier and a user profile associated with a user of the tool;
transmitting, via the interface, the request;
receiving, via the interface, a guidance document associated with the request; and
outputting the guidance document.

**Fig. 1**

100

S102 Receive a first user input

S104 Generate a request

S106 Transmit the request

S108 Receive a guidance document

S110 Output the guidance document

# Fig. 2

**Fig. 3**

**Fig. 4**

**Fig. 5**

**Fig. 6**

Europäisches
Patentamt

European
Patent Office

Office européen
des brevets

## EUROPEAN SEARCH REPORT

Application Number

EP 22 18 0744

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/354584 A1 (WALLENFELT BRIAN P [US]) 21 November 2019 (2019-11-21) * abstract; figures 1,3, 6 * * paragraphs [0019], [0064] * ----- | 1-15 | INV. G06F40/166 |
| A | EP 3 367 387 A1 (DIGITAL SURGERY LTD [GB]) 29 August 2018 (2018-08-29) * abstract; figure 10 * ----- | 1-15 | |

TECHNICAL FIELDS
SEARCHED     (IPC)

G06F

The present search report has been drawn up for all claims

| Place of search | Date of completion of the search | Examiner |
|---|---|---|
| Berlin | 18 November 2022 | Triest, Johannes |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 18 0744

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2022

| Patent document cited in search report | Publication date | Patent family member(s) | Publication date |
|---|---|---|---|
| US 2019354584 A1 | 21-11-2019 | NONE | |
| EP 3367387 A1 | 29-08-2018 | NONE | |

EPO FORM P0459

For more details about this annex : see Official Journal of the European Patent Office, No. 12/82